# NEUE EUROPÄISCHE PATENTSCHRIFT

(11) **EP 1 101 642 B2**
(45) Veröffentlichungstag und Bekanntmachung des Hinweises auf die Entscheidung über den Einspruch: **21.11.2007**
(45) Hinweis auf die Patenterteilung: 12.11.2003
(21) Anmeldenummer: 00120622.6
(22) Anmeldetag: 21.09.2000
(51) Int. Cl.: B60J 7/12

(54) **Faltverdeck für ein Cabriolet-Fahrzeug**
Folding soft top for convertible vehicle
Toit pliant pour véhicule convertible

(30) Priorität: 18.11.1999 DE 19955404
(43) Veröffentlichungstag der Anmeldung: 23.05.2001
(73) Patentinhaber: Wilhelm Karmann GmbH, 49084 Osnabrück (DE)
(72) Erfinder: Heselhaus, Udo, 49479 Ibbenbüren (DE); Richter, Wolfgang, Commerce, Michigan 48382 (US)
(74) Vertreter: Busse & Busse Patentanwälte

(56) Entgegenhaltungen:
- EP-A- 0 592 109
- EP-B- 0 521 307
- DE-A- 4 130 133
- DE-C- 19 613 356
- DE-U- 9 300 211
- US-A- 5 286 077

## Beschreibung

Die Erfindung bezieht sich auf ein Faltverdeck für ein Cabriolet-Fahrzeug in einer Ausbildung gemäß dem Oberbegriff des Anspruchs 1.

Bei einem bekannten Faltverdeck (DE 41 30 133 A1) ist dieses ausgehend vom heckseitigen Antriebs- und Stützbereich mit Gestängeschenkeln versehen, die eine hintere Viergelenkkette, eine mit dieser verbundene vordere Viergelenkkette und einen an dieser durch ein Koppelglied angelenkten Dachlenker im Bereich des Dachspitzenteiles bilden. Mit dieser Verdeckkinematik wird erreicht, daß die im Bereich der beiden Viergelenkketten erfolgende Faltung durch einen der Gestängeschenkel im Bereich des Koppelgliedes auf den vorderen Dachlenker übertragen werden kann. Bei Einleitung einer Schließbewegung wird das auf den Teilen des vorderen Viergelenkes in Klappstellung abgelegte Dachspitzenteil auf einer bogenförmigen Schließbahn zum Frontscheibenbereich nach vorn geklappt. Die vordere Viergelenkkette erzeugt dabei im Bereich des Koppelgliedes eine zusätzliche Bewegung, derart, daß das vordere Ende des Dachlenkers kurz vor oder beim Erreichen der aufgespannten Schließstellung eine nach unten gerichtete Verlagerungsbewegung ausführt. Damit soll ohne zusätzliche manuelle Eingriffe das gesamte Verdeckgestänge im Bereich des Frontscheibenrahmens verriegelt werden.

Bei einem Cabriolet-Fahrzeug gemäß EP 0 521 307 B1 sind die Gestängeschenkel ausgehend von einem vorderen Seitenschenkel nur mit zwei Viergelenkketten versehen, die im gemeinsamen Verbindungsbereich durch Gelenkpunkte verbundene Lenk- und Führungsschenkel aufweisen. Durch diese Verbindung der Viergelenkketten ist die Antriebskinematik auf relativ kurz bemessene Dachkonstruktionen beschränkt. Aus der DE 196 13 356 C2 ist ein Cabriolet-Fahrzeug mit einem Faltverdeck bekannt, das einen drei Teilabschnitte aufweisenden Dachrahmen umfasst, dessen hinterer und mittlerer Teilabschnitt bei einer Absenkbewegung des Verdecks gegensinnig verschwerkt werden, so daß der mittlere Teilabschnitt in der Absenkstellung auf dem hinteren Teilabschnitt liegt.

Die Erfindung befaßt sich mit dem Problem, ein Cabriolet-Fahrzeug mit einem Faltverdeck der gemäß EP 0 521 307 B1 bekannten Art derart weiterzuentwickeln, daß dessen Verdeckkinematik mit geringem Aufwand an jeweilige Dachkonturen und Längenabmessungen unterschiedlicher Fahrzeugkarosserien anpaßbar ist und das Verdeckgestänge in mehrgliedriger Ausführung so verlagerbar ist, daß bei materialschonender Stellbewegung in Öffnungsstellung das Dachspitzenteil die Schutzabdeckstellung aufweist.

Die Erfindung löst diese Aufgabe durch ein Faltverdeck mit den Merkmalen des Anspruchs 1. Hinsichtlich wesentlicher weiterer Ausgestaltungsmerkmale wird auf die Ansprüche 2 bis 9 verwiesen.

Das erfindungsgemäße Faltverdeck ist im Bereich seiner zwei als Parallelogrammlenker in das Klappgestänge integrierten Viergelenkketten mit einem zwischen diesen als zentrale Steuereinheit wirksamen Gelenkträger versehen, mit dem für die beiden Viergelenkketten die Abstände von jeweils zwei Gelenkpunkten optimal vorgegeben werden. Diese räumliche Zuordnung der Gelenkpunkte an dem Gelenkträger ist konstruktiv variabel ausführbar, so daß eine an Fahrzeugabmessungen unterschiedlicher Karosserien anpaßbare Dachhautkontur mit der Verdeckkinematik erfaßbar ist und mit dem Klappgestänge eine entsprechende Stell- und Schließbewegungen möglich sind.

Der als Steuereinheit vorgesehene Gelenkträger erfaßt dabei die vier Gestängeschenkel der beiden hintereinander angeordneten Viergelenkketten, wobei die Gelenkpunkte zumindest eines Schenkels jeder Gelenkkette in einem mittleren Kreuzungsbereich mit einem Höhenabstand am Gelenkträger angeordnet sind und an diesem ein den Bewegungsablauf steuerndes Lenkkreuz definiert ist. Damit ist zumindest ein Schenkelteil der vorderen Viergelenkkette bei Einleitung der Schwenkbewegung des Faltverdecks mit einer Schwenk/Schubkomponente verlagerbar. Bei der Öffnungsbewegung wird zumindest ein Teilabschnitt des die Dachhaut tragenden und am Schenkel des Viergelenks abgestützten Verdeckrahmens so verlagert, daß dieser Teil eine eigene Bewegungskurve durchläuft und bei Erreichen der Öffnungsstellung oberhalb eines hinteren Rahmenteils abgelegt wird. Gleichzeitig wird der vordere Dachspitzenteil mit einer einfachen Schwenkbewegung aus seiner der Schließkontur des Faltverdecks entsprechenden Stellung am Windschutzscheibenrahmen in die heckseitige Schutzabdeckstellung so geführt, daß die in Ablagestellung geklappten hinteren Teile des Klappgestänges zumindest bereichsweise überdeckt sind.

Während der Stellbewegung werden die Teile des Klappgestänges mittels des Gelenkträgers so gesteuert, daß die Dachhaut eine optimale Faltung erfährt und damit zu Materialbruch führende Überbelastungen durch Druck- und/oder Zugspannungen im Bereich der Dachhaut vermieden sind.

Weitere Einzelheiten und vorteilhafte Wirkungen der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine Ausschnittsdarstellung eines Cabriolet-Fahrzeuges mit einem in Schließstellung am vorderen Windschutzscheibenrahmen befindlichem Faltverdeck,
- Fig. 2 bis Fig. 4: jeweilige Bewegungsphasen bei Einleitung einer Stellbewegung am Faltverdeck gemäß Fig. 1,
- Fig. 5: das Faltverdeck gemäß Fig. 1 mit in Schutzabdeckstellung verschwenktem Dachspitzenteil,
- Fig. 6: eine Prinzipdarstellung des Klappgestänges in einer Öffnungsphase ähnlich Fig. 3,
- Fig. 7 und Fig. 8: jeweilige Bewegungsphasen des in seinen Einzelteilen veranschaulichten Klappgestänges (ähnlich Fig. 3 und Fig. 4).

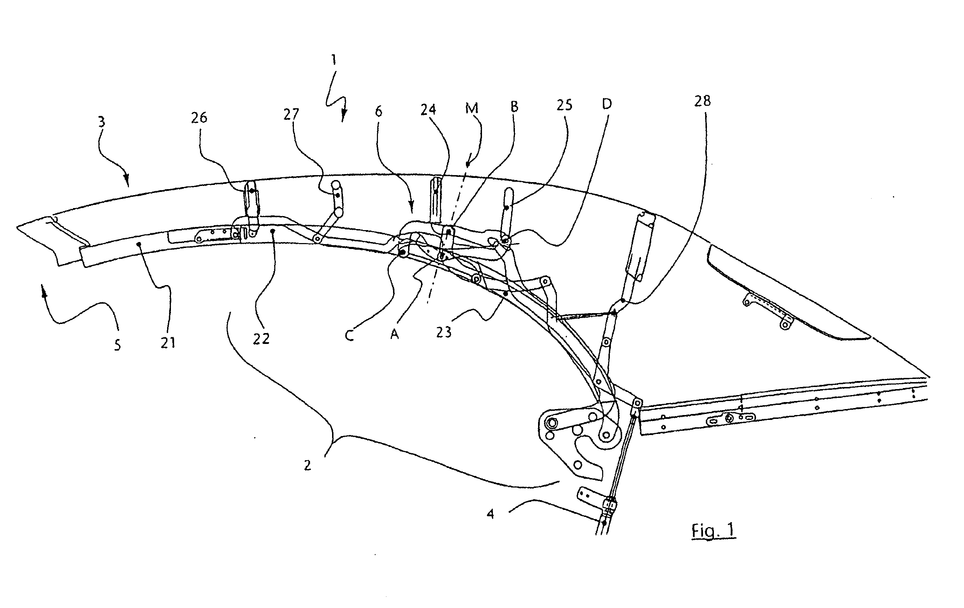

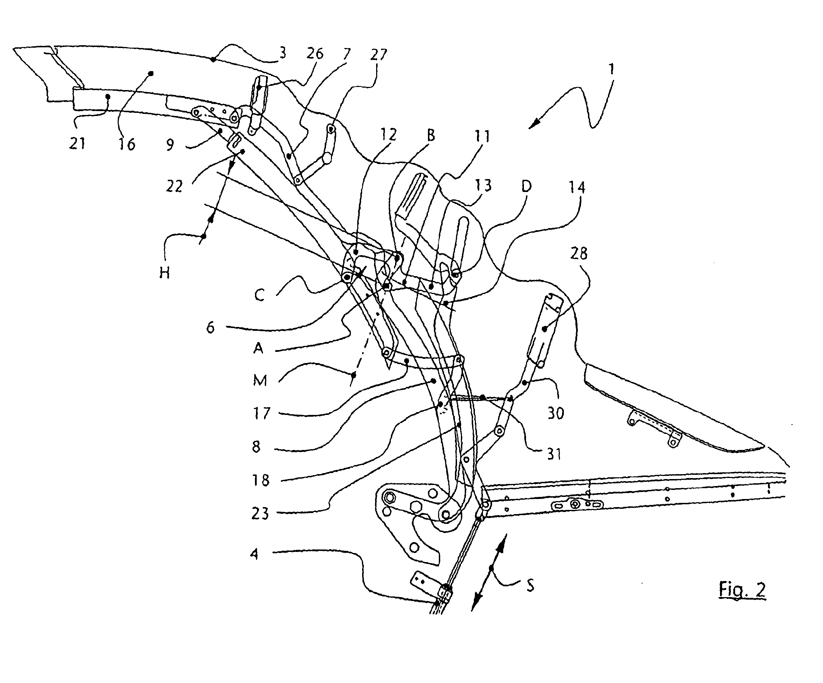

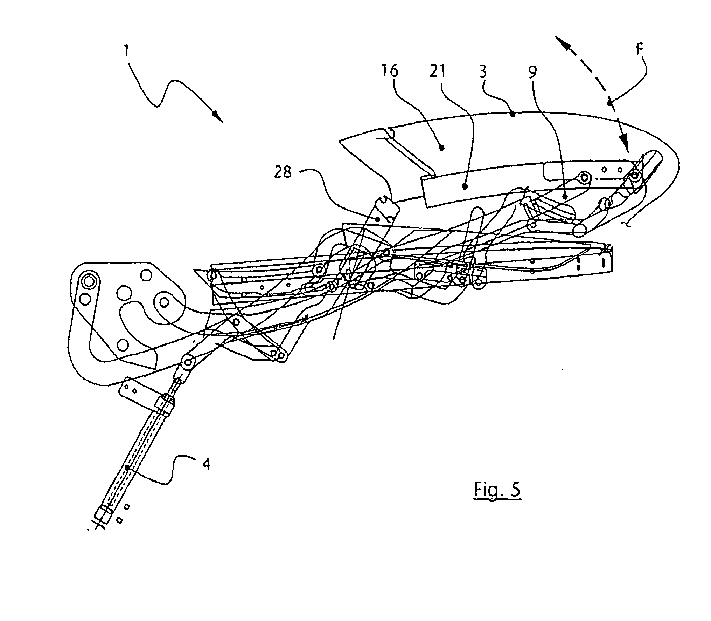

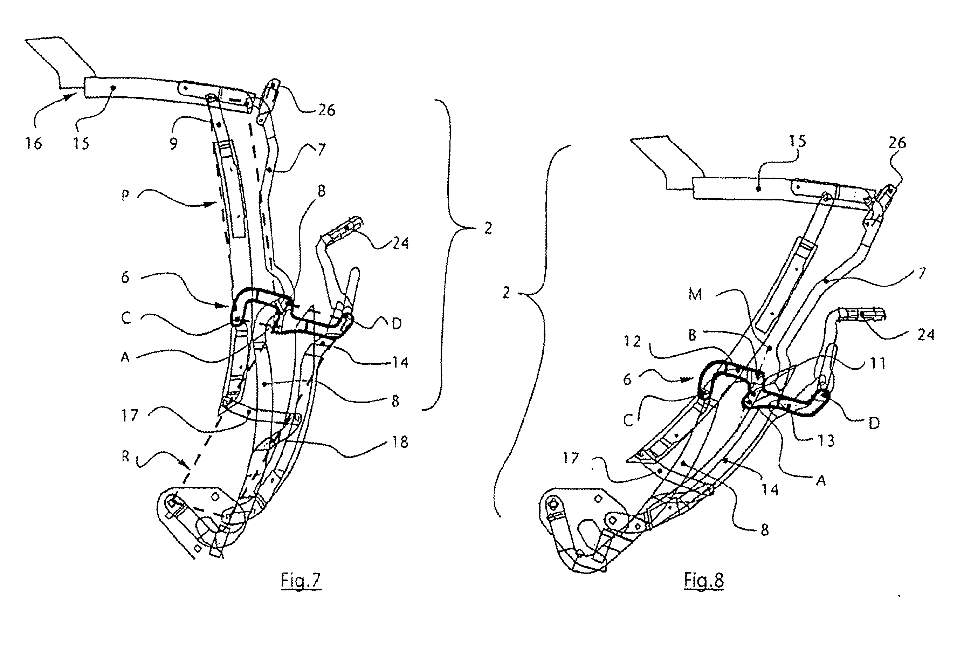

In Fig. 1 ist ein insgesamt mit 1 bezeichnetes Faltverdeck eines nicht näher dargestellten Cabriolet-Fahrzeugs veranschaulicht, dessen an einem seitlichen Klappgestänge 2 (von dem in sämtlichen Darstellungen nur jeweils eine Seite dargestellt ist) angreifende Dachhaut 3 zwischen paarweise symmetrisch zur Fahrzeug-Längsmittelebene gegenüberliegenden Gestängeschenkeln aufgenommen ist. Die Gestängeschenkel bilden in Form von jeweiligen Parallelogrammlenkern P und R (Strichdarstellung in Fig. 7) eine vordere (P) und eine hintere (R) Viergelenkkette. Diese Viergelenkketten sind im Bereich eines gemäß EP 0 521 307 B1 offenbarten Verbindungsschenkels gemeinsam so abgestützt, daß zumindest drei Gelenkpunkte gebildet sind und das Faltverdeck 1 bei Einleitung einer Stellbewegung mittels eines Hydraulikzylinders 4 (Pfeil S, Fig. 2) durch einen gesteuerten Schwenkvorgang aus der im Frontscheibenbereich 5 gehaltenen Schließstellung (Fig. 1) zum Heckbereich des Fahrzeugs hin in eine Schutzabdeckstellung (Fig. 5) verlagerbar und aus dieser rückführbar ist.

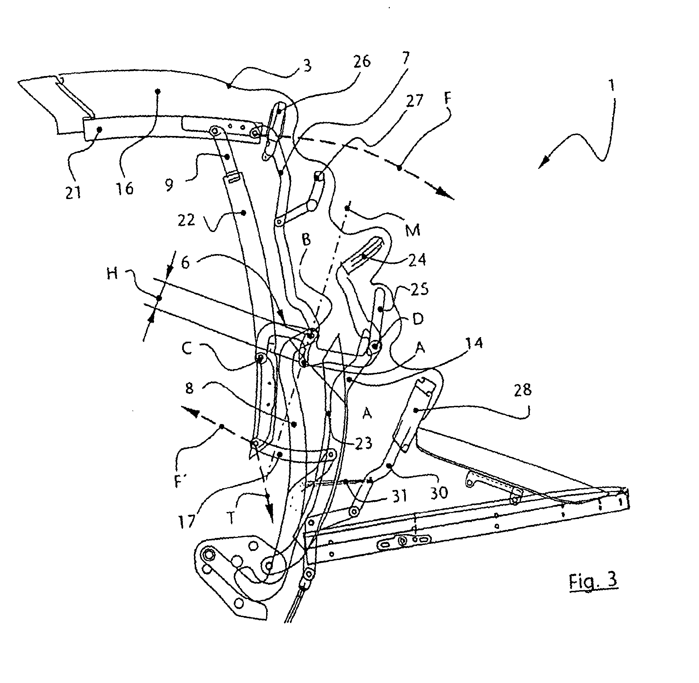

Die erfindungsgemäße Ausführung des Faltverdecks 1 weist zwischen den beiden Viergelenkketten P und R einen als Gelenkträger 6 (Fig. 7) ausgebildeten Verbinder auf, an dem ein rückwärtiger Führungsschenkel 7 der vorderen Viergelenkkette P sowie eine vordere Hauptführungsstange 8 der hinteren Viergelenkkette R mit einem Höhenabstand H in jeweils einem Gelenkpunkt A bzw. B abgestützt sind. Gleichzeitig ist dem Gelenkträger 6 die vordere Viergelenkkette P mit dem den dritten Gelenkpunkt C bildenden Vorderlenker 9 zugeordnet. Der Vorderlenker 9 wird während der durch die Stellbewegung S eingeleiteten Öffnungsbewegung des Faltverdecks (Pfeil F, Fig. 3) mit gleichsinniger Schwenkrichtung F' geschwenkt und dabei in Richtung T (Fig. 3) verlagert ist, so daß der Vorderlenker 9 durch diese Schwenk/Schubkomponente (Pfeil F', T in Fig. 3) eine eigene Bahnkurve durchläuft.

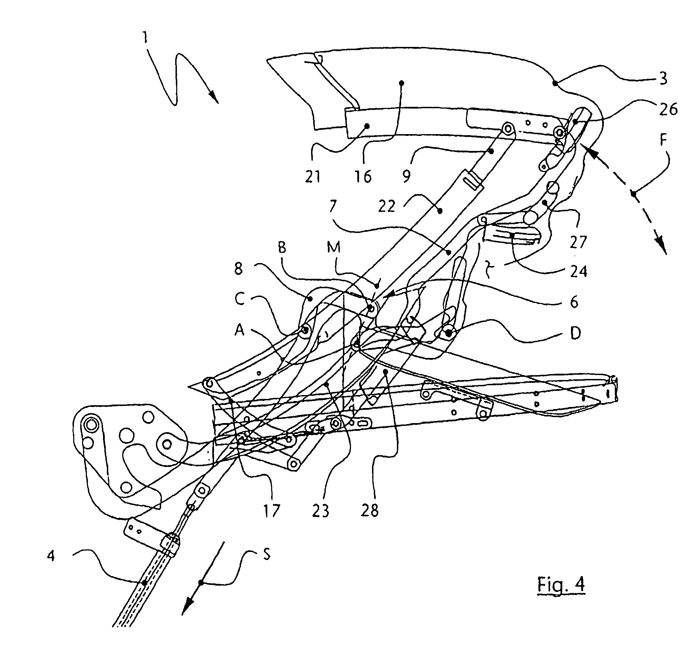

Der Gelenkträger 6 ist als steuerndes Zwischenteil der Parallelogrammlenkeranordnung so ausgebildet, daß zwischen den beiden den Höhenabstand H aufweisenden Gelenkpunkten A und B eine in jeder Stellung des Faltverdecks 1 (Fig. 1 bis Fig. 5) eine eine konstante Winkelstellung aufweisende Hochachse M definiert ist (Fig. 3). In der dargestellten Ausführungsform ist der Höhenabstand H der beiden Gelenkpunkte A und B in jeder Stellung des Faltverdecks 1 ebenfalls konstant.

Die Einzeldarstellungen der Teile des Klappgestänges 2 gemäß Fig. 7 und 8 verdeutlichen in Zusammenschau mit den Bewegungsphasen gemäß Fig. 2 und 3 die Wirkung des Gelenkträgers 6 als ein Lenkkreuz, wobei der Gelenkpunkt B der vorderen Hauptführungsstange 8 des hinteren Viergelenkes R mit dem Höhenabstand H oberhalb des Gelenkpunktes A der rückwärtigen Führungsstange 7 der vorderen Viergelenkkette P angeordnet ist.

Der in seinen Abmessungen weitgehend variable Gelenkträger 6 ist in der dargestellten Ausführungsform als ein einstückiges, im wesentlichen Z-förmiges Bauteil ausgebildet, an dessen in Einbaulage im wesentlichen senkrecht verlaufenden Mittelteil 11 sowohl die beiden den Höhenabstand H aufweisenden mittleren Gelenkpunkte A und B als auch jeweilige Stützarme 12, 13 mit den Vorderlenker 9 der vorderen Viergelenkkette P bzw. den Hinterlenkern 14 der hinteren Viergelenkkette R abstützenden Gelenkpunkten C und D vorgesehen sind.

Die Einzeldarstellung des Klappgestänges 2 gemäß Fig. 7 und 8 zeigen, daß der zur vorderen Viergelenkkette P gerichtete vordere Stützarm 12 des Gelenkträgers 6 im mittleren Bereich des Vorderlenkers 9 angelenkt ist. Dieser Vorderlenker 9 greift einerseits am Seitenschenkel 15 des Dachspitzenteils 16 des Klappgestänges 2 an und andererseits ist der Vorderlenker 9 über einen Schwinghebel 17 mit einem Stützhebel 18 der Hauptführungsstange 8 der hinteren Viergelenkkette R verbunden.

Mit der vorbeschriebenen Ausführung des Klappgestänges 2 mit der Verbindung der Hebelkonstruktion an dem Gelenkträger 6 ist erreicht, daß die beiden Viergelenkketten P und R den insbesondere drei Teilabschnitte 20, 21, 22 aufweisenden und die Dachhaut 3 mit dem Klappgestänge 2 verbindenden Dachrahmen zumindest im mittleren Teilabschnitt 22 so steuern können, daß eine materialschonende Verlagerung der Dachhaut 3 in die Öffnungsstellung (Fig. 5) möglich ist und dabei der Vorderlenker 9 mit seinem mittleren Teilabschnitt 22 in eine Absenkstellung neben den hinteren Teilabschnitt 23 positionierbar ist. Damit ist eine vorteilhafte enge Packstellung erreicht und der zurückgeschwenkte Dachspitzenteil 16 übergreift die in Öffnungsstellung geklappten Teile des Verdecks (Fig. 5).

Die schonende Bewegung der Dachhaut 3 wird insbesondere dadurch deutlich, daß der Gelenkträger 6 im Bereich seines hinteren Stützarmes 13 den vierten Gelenkpunkt D bildet, der zusätzlich zu dem Hinterlenker 14 der hinteren Viergelenkkette R noch zwei weitere die Dachhaut 3 untergreifende Verdeckspannspriegel 24, 25 abstützt.

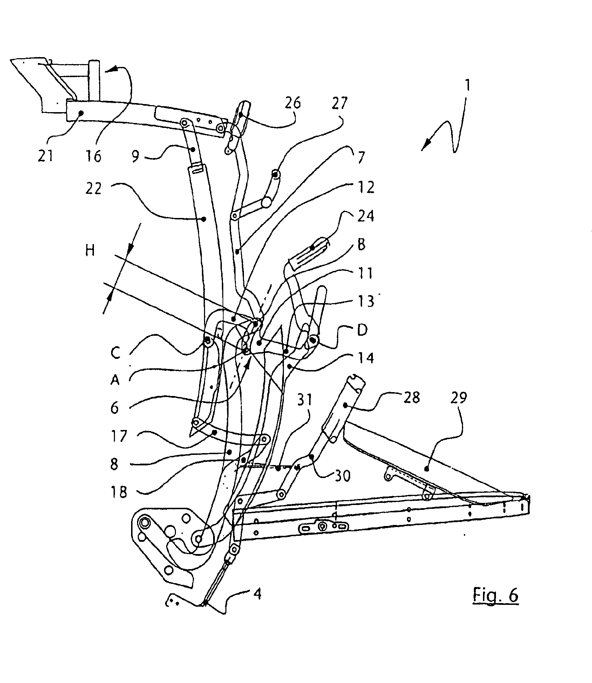

In der dargestellten Ausführungsform gemäß Fig. 1 bis 5 sind weitere Dachspriegel 26 und 27 im vorderen Bereich des Klappgestänges 2 vorgesehen und im hinteren Bereich des Faltverdecks 1 ist ein Hauptspannspriegel 28 vorgesehen, der insbesondere oberhalb einer Heckscheibe 29 (Fig. 6) eine stabile Dachhautspannung (Fig. 1) bewirkt. Der Hauptspannspriegel 28 ist dabei über einen Schwinghebel 30 mit dem Hinterlenker 14 verbunden und über einen Federdämpfer 31 zusätzlich gesichert.

## Patentansprüche

1. Faltverdeck für ein Cabriolet-Fahrzeug, dessen an einem seitlichen Klappgestänge (2) angreifende Dachhaut (3) zwischen paarweise symmetrisch zur Fahrzeug-Längsmittelebene gegenüberliegenden Gestängeschenkeln aufgenommen ist, die in Form von Lenkschenkeln in Gestalt von Hauptführungsstangen (8) und Vorderlenkern (9) sowie Führungsschenkeln (7, 14) aufweisenden Parallelogrammlenkern eine an einem Seitenschenkel (15) angreifende vordere (P) und eine im Heckbereich abgestützte hintere Viergelenkkette (R) bilden, die im gemeinsamen Verbindungsbereich mit zumindest drei Gelenkpunkten so abgestützt sind, daß ein Dachspitzenteil (16) des Faltverdecks (1) bei Einleitung einer Stellbewegung (S) durch einen gesteuerten Schwenkvorgang (F) aus einer im Frontscheibenbereich (5) gehaltenen Schließstellung zum Heckbereich des Fahrzeugs hin in eine Schutzabdeckstellung verlagerbar und aus dieser rückführbar ist, **dadurch gekennzeichnet, daß** der Verbindungsbereich in Form eines Verbinders zwischens den beiden Viergelenkketten (P, R) als ein den rückwärtigen Führungsschenkel (7) der vorderen Viergelenkkette (P) sowie die vordere Hauptführungsstange (8) der hinteren Viergelenkkette (R) mit einem Höhenabstand (H) in jeweils einem der Gelenkpunkte (A, B) abstützender Gelenkträger (6) ausgebildet ist und diesem die vordere Viergelenkkette (P) mit dem den dritten Gelenkpunkt (C) bildenden Vorderlenker (9) derart zugeordnet ist, daß dieser beim Schwenkvorgang (F) in einer gleichsinnigen Schwenkrichtung (F') und einer Schubrichtung (T) verlagerbar ist, wobei der Gelenkträger (6) im Bereich der beiden Viergelenkketten (P, R) mit einem drei Teilabschnitte (21, 22, 23) aufweisenden und die Dachhaut seitlich mit dem Klappgestänge (2) verbindenden Dachrahmen zusammenwirkt und wobei der erste Teilabschnitt (21) am Dachspitzenteil festgelegt ist, der mittlere Teilabschnitt (22) mit dem Vorderlenker (9) der vorderen Viergelenkkette (P) verbunden ist und der dritte Teilabschnitt (23) am Hinterlenker (14) der hinteren Viergelenkkette (R) angreift und die beiden Viergelenkketten (P, R) den Dachrahmen im mittleren Teilabschnitt mit zu der Schwenkbewegung des hinteren Teilabschnittes (23) gleichsinniger Schwenkbewegung so steuern, daß der Vorderlenker (9) mit seinem mittleren Teilabschnitt (22) in eine Absenkstellung im Fahrzeugquerrichtung neben den hinteren Teilabschnitt (23) positionierbar ist.

2. Faltverdeck nach Anspruch 1, **dadurch gekennzeichnet, daß** der Gelenkträger (6) zwischen den beiden den Höhenabstand (H) aufweisenden Gelenkpunkten (A, B) eine in jeder Stellung des Faltverdecks (1) eine konstante Winkelstellung aufweisende Hochachse (M) definiert.

3. Faltverdeck nach Anspruch 1 oder 2, **dadurch gekennzeichnet, daß** der Höhenabstand (H) der beiden Gelenkpunkte (A, B) in jeder Stellung des Faltverdeckes (1) konstant ist.

4. Faltverdeck nach einem der Ansprüche 1 bis 3, **dadurch gekennzeichnet, daß** der Gelenkpunkt (B) der vorderen Hauptführungsstange (8) der hinteren Viergelenkkette (R) mit dem Höhenabstand (H) oberhalb des Gelenkpunktes (A) der rückwärtigen Führungsstange (7) der vorderen Viergelenkkette (P) angeordnet ist und damit diese beiden Führungsstangen (7, 8) am Gelenkträger (6) ein Lenkkreuz definieren.

5. Faltverdeck nach einem der Ansprüche 1 bis 4, **dadurch gekennzeichnet, daß** der Gelenkträger (6) als ein einstückiges, im wesentlichen Z-förmig verlaufendes Bauteil ausgebildet ist, an dessen in Einbaulage im wesentlichen senkrecht verlaufenden Mittelteil (11) sowohl die den Höhenabstand (H) aufweisenden mittleren Gelenkpunkte (A, B) als auch jeweilige Stützarme (12, 13) mit den Vorderlenker (9) der vorderen Viergelenkkette (P) bzw. den Hinterlenker (14) der hinteren Viergelenkkette (R) abstützenden Gelenkpunkten (C, D) vorgesehen sind.

6. Faltverdeck nach einem der Ansprüche 1 bis 5, **dadurch gekennzeichnet, daß** der zur vorderen Viergelenkkette (P) gerichtete vordere Stützarm (12) des Gelenkträgers (6) im mittleren Bereich des Vorderlenkers (9) angelenkt ist, dieser einerseits am Seitenschenkel (15) eines Dachspitzenteils (16) des Klappgestänges (2) angreift und andereseits der Vorderlenker (9) über einen Schwinghebel (17) mit einem Stützhebel (18) der Hauptführungsstange (8) der hinteren Viergelenkkette (R) verbunden ist.

7. Faltverdeck nach einem der Ansprüche 1 bis 6, **dadurch gekennzeichnet, daß** der hintere Stützarm (13) des Gelenkträgers (6) in seinem vierten Gelenkpunkt (D) den Hinterlenker (14) der hinteren Viergelenkkette (R) und zumindest einen die Dachhaut (3) untergreifende Verdeckspannspiegel (24, 25) abstützt.

## Claims

1. Folding soft top for a convertible vehicle, whose roof skin (3) engages with a lateral folding linkage (2) and is accommodated between linkage links which are situated opposite one another in pairs symmetrically to the longitudinal centre plane of the vehicle, which linkage links are in the form of parallelogram linkages, having directing links, in the form of main base bars (8) and front directing arms (9), and base links (7, 14), which form a front four-bar linkage (P) engaging with a side link (15) and a rear four-bar linkage (R) which is supported in the rear region of the vehicle, which four-bar linkages (P, R) are supported in the region where they are connected together by at least three pivot points in such a way that a roof tip-portion (16) of the folding soft top (1) can, when a positioning movement (S) is initiated, be displaced by a controlled pivoting process (F) from a raised position in which it is held in the area (5) of the windscreen towards the rear region of the vehicle and into a protective covering position, and can be reversed from this position, **characterised in that** the connecting region, in the form of a connector, between the two four-bar linkages (P, R) is in the form of a pivot carrier (6) which supports the base link (7) at the rear of the front four-bar linkage (P) and the main base bar (8) at the front of the rear four-bar linkage (R) at a heightwise spacing (H) at respective ones (A, B) of their pivot points, and the front four-bar linkage (P) having the front directing arm (9) forming the third pivot point (C) is associated with the pivot carrier (6) in such a way that the front directing arm (9) can be displaced, in the pivoting process (F), both in a direction of pivot (F') directed in the same direction and in a direction of thrust (T), the pivot carrier (6) co-operating in the region of the two four-bar linkages (P, R) with a roof frame which has three sectional parts (21, 22, 23) and which, at the sides, connects the roof skin to the folding linkage (2), the first sectional part (21) being secured to the roof tip-portion, the centre sectional part (22) being connected to the directing arm (9) at the front of the front four-bar linkage (P), and the third sectional part (23) engaging with the directing arm (14) at the rear of the rear four-bar linkage (R), and the two four-bar linkages (P, R) controlling the roof frame at the centre sectional part, by the pivoting movement directed in the same direction as the pivoting movement of the rear sectional part (23), in such a way that the front directing arm (9), together with its centre sectional part (22), can be positioned next, in the transverse direction of the vehicle, to the rear sectional part (23) in a lowered position.

2. Folding soft top according to claim 1, **characterised in that** the pivot carrier (6) defines, between the two pivot points (A, B) which are at the heightwise spacing (H), a heightwise axis (M) which occupies a constant angular position whatever the position of the folding soft top (1).

3. Folding soft top according to claim 1 or 2, **characterised in that** the heightwise spacing (H) of the two pivot points (A, B) is constant whatever the position of the folding soft top (1).

4. Folding soft top according to one of claims 1 to 3, **characterised in that** the pivot point (B) of the main base bar (8) at the front of the rear four-bar linkage (R) is arranged at the heightwise spacing (H) above the pivot point (A) of the base bar (7) at the rear of the front four-bar linkage (P), and these two base bars (7, 8) thus define a directing cross at the pivot carrier (6).

5. Folding soft top according to one of claims 1 to 4, **characterised in that** the pivot carrier (6) is in the form of a one-piece component extending substantially in a Z-shape, at whose centre portion (11), which extends substantially vertically in the installed position, are provided not only the centre pivot points (A, B) at the heightwise spacing (H) but also support arms (12, 13) which respectively have pivot points (C, D) respectively supporting the directing arm (9) at the front of the front four-bar linkage (P) and the directing arm (14) at the rear of the rear four-bar linkage (R).

6. Folding soft top according to one of claims 1 to 5, **characterised in that** the front support arm (12) of the pivot carrier (6), which arm (12) is directed towards the front four-bar linkage (P), is hinged to the centre region of the front directing arm (9), and the latter on the one hand engages with the side link (15) of a roof tip-portion (16) of the folding linkage (2) and on the other hand the front directing arm (9) is connected via a pivoting lever (17) to a support lever (18) belonging to the main base bar (8) of the rear four-bar linkage (R).

7. Folding soft top according to one of claims 1 to 6, **characterised in that** the rear support arm (13) of the pivot carrier (6) supports, at its fourth pivot point (D), the directing arm (14) at the rear of the rear four-bar linkage (R) and at least one tensioning bow (24, 25) for the soft top which engages under the roof skin (3).

## Revendications

1. Toit pliant pour un véhicule cabriolet dont la toile de toit (3), qui coopère avec une armature pliante latérale (2), est reçue entre des branches d'armature mutuellement opposées par paires, symétriquement par rapport au plan longitudinal moyen du véhicule et qui, sous la forme de biellettes de parallélogrammes présentant des biellettes de direction réalisées comme tiges de guidage principale (8) et biellettes avant (9) ainsi que des biellettes de guidage (7, 14), forment une chaîne cinématique à quatre points articulés avant (P) qui attaque une branche latérale (15) et une chaîne cinématique à quatre points articulés arrière (R) qui prend appui dans la région arrière, chaînes qui sont appuyées dans la région de liaison commune qui comprend au moins trois points d'articulation, de telle manière que lors du déclenchement d'un mouvement de positionnement (S), une partie de pointe de toit (16) du toit pliant (1), puisse être déplacée par un processus de pivotement commandé (F), d'une position de fermeture tenue dans la région du pare-brise (5), vers la région arrière du véhicule, pour prendre une position de recouvrement de protection, et être renvoyée en sens inverse à partir de cette dernière position,
**caractérisé en ce que**
la zone de liaison en forme d'un organe de liaison entre les deux chaînes cinématiques à quatre points articulés (P, R) est constitué par un support d'articulation (6) qui soutient la branche de guidage arrière (7) de la chaîne cinématique à quatre points articulés avant (P), ainsi que la tige de guidage principale avant (8) de la chaîne cinématique à quatre points articulés arrière (R) à un écartement en hauteur (H) à chaque fois à un de leurs points d'articulation (A, B), et la chaîne cinématique à quatre points articulés avant (P) est associée à ce support comprenant la biellette avant (9) qui forme le troisième point d'articulation (C) de telle manière que, lors du pivotement (F), cette biellette avant puisse être déplacée dans une direction de pivotement de même sens (F') et, dans une direction de translation (T), et dans la région des deux chaînes cinématiques à quatre points articulés (P, R), le support d'articulation (6) coopère avec un cadre de toit qui présente trois segments partiels, (21, 22, 23), et qui assemble latéralement la toile de toit à l'armature pliante (2),
le premier segment partiel (21) étant fixé à la partie de pointe de toit (16), le segment partiel médian (22) étant relié à la biellette avant (9) de la chaîne cinématique à quatre points articulés avant (P) et le troisième segment partiel (23) attaquant la biellette arrière (14) de la chaîne cinématique à quatre points articulés arrière (R).
les deux chaînes articulées à quatre points (8, R) commandant le cadre de toit dans sa partie médiane avec un mouvement de basculement de même sens que le basculement de la partie arrière (23), de telle sort que la biellette avant (9) se positionne avec sa partie médiane (22) dans une position abaissée transversalement au véhicule à côté de la partie arrière (23).

2. Toit pliant selon la revendication 1,
**caractérisé en ce que**
le support d'articulation (6) définit, entre les deux points d'articulation (A, B) qui présentent l'écartement en hauteur (H), un axe vertical (M) qui présente une position angulaire constante dans toutes les positions du toit pliant (1).

3. Toit pliant selon la revendication 1 ou 2,
**caractérisé en ce que**
l'écartement en hauteur (H) des deux points d'articulation (A, B) est constant dans toutes les positions du toit pliant (1).

4. Toit pliant selon une des revendications 1 à 3,
**caractérisé en ce que**
le point d'articulation (B) de la tige de guidage principale (8) de la chaîne cinématique à quatre points articulés arrière (R) est disposé avec l'écartement en hauteur (H) au-dessus du point d'articulation (A) de la tige de guidage arrière (7) de la chaîne cinématique à quatre points articulés avant (P), et, de cette façon, les deux tiges de guidage (7, 8) définissent une croix direction sur le support d'articulation (6).

5. Toit pliant selon une des revendications 1 à 4,
**caractérisé en ce que**
le support d'articulation (6) est formé par un élément en une seule pièce qui s'étend sensiblement en Z, dont la partie médiane (11) qui s'étend sensiblement verticalement dans la position de montage, comporte aussi bien les points d'articulation centraux (A, B) qui présentent l'écartement en hauteur (H) que des bras d'appui (12, 13) présentant les points d'articulation (C, D) qui soutiennent respectivement la biellette avant (9) de la chaîne cinématique à quatre points articulés avant (P) et la biellette arrière (14) de la chaîne cinématique à quatre points articulés arrière (R).

6. Toit pliant selon une des revendications 1 à 5,
**caractérisé en ce que**
le bras d'appui avant (12) du support d'articulation (6) qui est dirigé vers la chaîne cinématique à quatre points articulés avant (P), est articulé sur la région médiane de la biellette avant (9), d'une part, cette dernière attaque la branche latérale (15) d'une partie de pointe de toit (16) de l'armature pliante (2) et, d'autre part, la biellette avant (9) est reliée, par l'intermédiaire d'un levier oscillant (17), à un levier d'appui (18) de la tige de guidage principale (8) de la chaîne cinématique à quatre points articulés arrière (R).

7. Toit pliant selon une des revendications 1 à 7,
**caractérisé en ce qu'**
à son quatrième point d'articulation (D), le bras d'appui arrière (13) du support d'articulation (6) soutient la biellette arrière (14) de la chaîne cinématique à quatre points articulés arrière (R) et au moins un arceau (24, 25) de tension du toit qui attaque la toile de toit (3) par dessous.
